# EUROPÄISCHE PATENTANMELDUNG

(11) **EP 0 995 633 A1**
(43) Veröffentlichungstag der Anmeldung: **26.04.2000**
(21) Anmeldenummer: 99112704.4
(22) Anmeldetag: 30.06.1999
(51) Int. Cl.: B60N 3/10

(54) **Haltevorrichtung**

(30) Priorität: 28.07.1998 DE 29813320 U
(71) Anmelder: Volkswagen Aktiengesellschaft, 38436 Wolfsburg (DE)
(72) Erfinder: Scholz, Eckhard, 38154 Königslutter (DE)

(57) **Zusammenfassung**

Zur Aufbewahrung von Gegenständen, insbesondere Getränkebehältnissen, in einem Fahrzeug wird eine aus einem Trägerteil (1) und einem an diesem Trägerteil (1) verschwenkbar befestigten Seitenarm (2) vorgeschlagen. Das Trägerteil weist an seiner Unterseite einen Bajonettverschluß (5) auf, der zur Befestigung der Haltevorrichtung an Innenverkleidungsteilen in einem Fahrzeug, insbesondere im Bereich der Mittelkonsole, dient. Der Seitenarm (2) ist mittels eines Scharniers (3) am Trägerteil (1) befestigt. In das Scharnier ist eine Feder integriert, die ein Einschwenken des Seitenarmes auf die Breite der aufgenommenen Gegenstände bewirkt. Alternativ ist der Seitenarm mittels einer Raste so fixierbar, daß er mit dem Trägerteil zumindest an der Außenseite eine im wesentlichen geschlossenen Oberfläche bildet.

## Beschreibung

Die Erfindung betrifft eine Haltevorrichtung nach dem Oberbegriff des Schutzanspruches 1.

Eine gattungsgemäße Haltevorrichtung ist beispielsweise aus der DE 44 41 265 A1 bekannt. Hier wird in einem Ausführungsbeispiel eine Haltevorrichtung für Behältnisse beschrieben, die aus einem Gehäuse und einer mindestens ein Behältnis aufnehmenden, aus dem Gehäuse herausfahrbaren Lade besteht, wobei an der Lade verschwenkbare Seitenarme vorgesehen sind.

Eine derartige Haltevorrichtung hat den Nachteil, daß eine vergleichsweise lange Führung zwischen Gehäuse und Lade erforderlich ist, um ein Verkanten zwischen Lade und Gehäuse zu verhindern. Um die Funktionssicherheit zu gewährleisten und der Haltevorrichtung ausreichend Stabilität zu verleihen, ist demzufolge eine relativ große Einbautiefe der Haltevorrichtung erforderlich.

Die zur Gewährleistung der Funktionsfähigkeit erforderliche große Einbautiefe bedingt, daß die Haltevorrichtung nur an bestimmten Stellen im Fahrzeug, an denen diese Einbautiefe zur Verfügung steht, angebracht werden kann. Die Haltevorrichtung ist demzufolge nicht beliebig flexibel im Fahrzeug plazierbar. Weiterhin ist die beschriebene Haltevorrichtung in ihrer Funktion auf die Aufnahme von Behältnissen, insbesondere Dosen, Bechern, Tassen usw. beschränkt, für die Aufnahme von beispielsweise Kleinteilen jedoch ungeeignet.

Der Erfindung liegt die Aufgabe zugrunde, eine gattungsgemäße Haltevorrichtung dahingehend zu verbessern, daß die beschriebenen Nachteile vermieden werden.

Diese Aufgabe wird gelöst mit einer Haltevorrichtung nach dem Schutzanspruch 1.

Nach Anspruch 1 wird bei einer Haltevorrichtung mit zumindest einem Trägerteil und mindestens einem am Trägerteil befestigten, verschwenkbaren Seitenarm das Trägerteil zumindest im wesentlichen topf- oder trogförmig ausgebildet. Die vorgeschlagene Haltevorrichtung ist demzufolge insbesondere zur Aufnahme eines Getränkebehältnisses oder alternativ zur Aufnahme verschiedener Kleinteile geeignet. Durch die topf- oder trogförmige Ausbildung des Trägerteiles kann beim Halten eines Getränkebehältnisses eine hohe Stabilität erreicht werden. Die topf- bzw. trogförmige Ausbildung des Trägerteiles ermöglicht weiterhin, daß aus einem Getränkebehältnis aufgrund von beispielsweise Fahrunebenheiten übertretende Flüssigkeit vom Trägerteil aufgenommen wird und demzufolge nicht den Fahrzeuginnenraum verschmutzt.

Der verschwenkbare Seitenarm ist bevorzugt so ausgeführt, daß er auf die Breite eines aufgenommenen Behältnisses beziehungsweise der aufgenommenen Gegenstände einschwenkbar ist. Dadurch kann auch bei geringerer Bauhöhe eine hohe Aufnahmestabilität erreicht werden. Das Einschwenken des Seitenarmes auf die Breite aufgenommener Gegenstände oder Behältnisse kann bevorzugt dadurch erfolgen, daß der verschwenkbare Seitenarm mittels eines Energiespeichers, insbesondere einer Feder, beaufschlagbar ist. Diese Ausführungsform ist insbesondere dann vorteilhaft, wenn Getränkebehältnisse, insbesondere Getränkedosen, unterschiedlicher Größe aufgenommen werden sollen. Mittels einer Haltevorrichtung der vorgeschlagenen Art können beispielsweise sowohl die gebräuchlichen Dosen für alkoholfreie Getränke wie auch die schlankeren Dosen für sogenannte Energiedrinks oder die kleineren sogenannten Japandosen sicher und klapperfrei aufbewahrt werden.

In einer weiteren bevorzugten Ausführungsform wird der verschwenkbare Seitenarm so am Trägerteil befestigt, daß sowohl ein Schwenken nach innen als auch nach außen ermöglicht wird. Dadurch wird auch die Aufbewahrung und Ablage von Gegenständen ermöglicht, die größer bzw. breiter als die Haltevorrichtung selbst sind.

Die Haltevorrichtung der vorgeschlagenen Art wird bevorzugt an mindestens einem Teil einer Innenverkleidung eines Fahrzeuges, insbesondere im Bereich der Mittelkonsole, angebracht.

In einer besonders bevorzugten Ausführungsform kann die Befestigung mittels eines Bajonettverschlusses erfolgen. Diese Ausführungsform besitzt den besonderen Vorteil, daß der Bajonettverschluß als Befestigungsvorrichtung bereits bei der Herstellung des Trägerteiles durch beispielsweise Spritzgießen an dieses angeformt werden kann. Dadurch ist die Herstellung auf besonders einfache und kostengünstige Weise realisierbar. Mittels des Bajonettverschlusses ist weiterhin die Montage der Haltevorrichtung im Fahrzeug auf besonders einfache Weise realisierbar, da keine zusätzlichen Bauteile wie beispielsweise Schrauben erforderlich sind und die Montage in einem Schritt mit lediglich einer Verdrehung der Haltevorrichtung erfolgen kann.

Es können auch mehrer Anbringungsorte für die Haltevorrichtung vorgesehen sein, die jeweils mit einer Bajonettverschlußaufnahme ausgerüstet sind, so daß der Fahrzeuginsasse die Haltevorrichtung nach seinen Wünschen an einem ihm genehmen Ort plazieren kann.

In einer weiteren bevorzugten Ausführungsform ist an der Haltevorrichtung, insbesondere am Trägerteil, eine Raste vorgesehen, mittels der der verschwenkbare Seitenarm fixierbar ist. Dabei ist die Raste bevorzugt so ausgeführt, daß der mittels der Raste fixierte Seitenarm mit dem topf- oder trogförmigen Trägerteil zumindest an dessen Außenseite eine im wesentlichen geschlossene Oberfläche bildet. Durch diese Verrastung wird eine an der Außenseite geschlossene Optik geschaffen, die sich nahtlos in das Design des Fahrzeuginnenraumes einfügen läßt.

In einer weiteren bevorzugten Ausführungsform sind am Trägerteil Haltelippen aus einem elastischen und/oder dämpfenden Material vorgesehen. Durch diese Haltelippen wird erreicht, daß aufgenommene Behältnisse klapperfrei und mit hoher Stabilität gehalten werden. Insbesondere werden dadurch die gehaltenen Behältnisse sicher vor einem Herausfallen aus der Haltevorrichtung bewahrt.

Die Erfindung wird anhand eines Ausführungsbeispieles näher erläutert. Dazu zeigen
- Fig. 1: eine räumliche Darstellung des Ausführungsbeispiels einer erfindungsgemäßen Haltevorrichtung,
- Fig. 2: einen Schnitt durch das Ausführungsbeispiel,
- Fig. 3: einen verschwenkbaren Seitenarm für das Ausführungsbeispiel,
- Fig. 4: die Verrastung des Seitenarmes für dieses Ausführungsbeispiel und
- Fig. 5: eine Draufsicht auf dieses Ausführungsbeispiel.

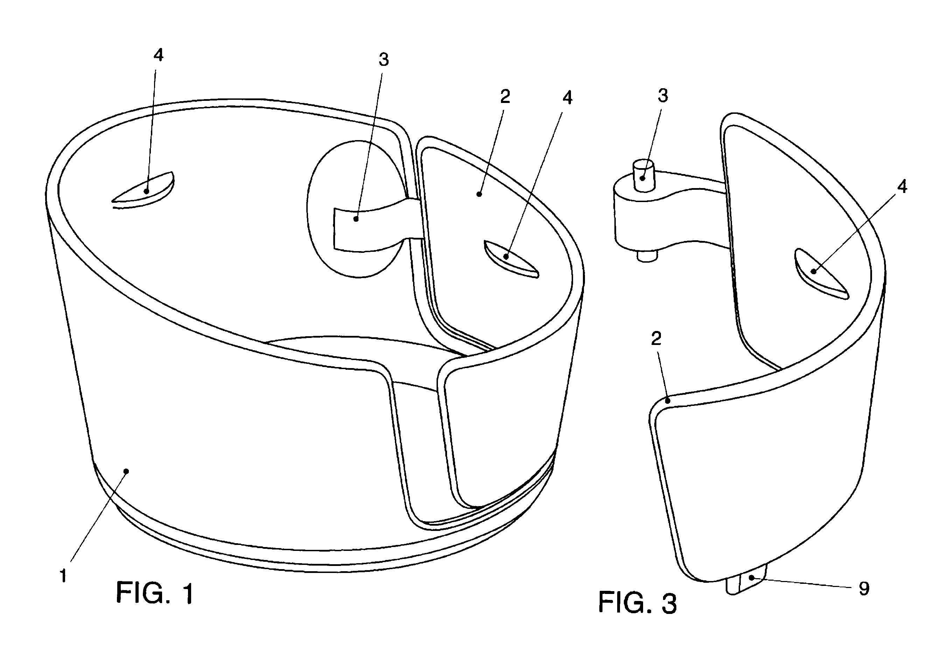

Figur 1 zeigt eine Ausführungsform der erfindungsgemäßen Haltevorrichtung, bestehend aus einem im wesentlichen topfförmigen Trägerteil 1 und einem an diesem Trägerteil 1 mittels eines Scharniers 3 schwenkbar befestigten Seitenarm 2. In das Scharnier 3 ist eine hier nicht dargestellte Feder integriert, die eine Verschwenkung des Seitenarmes auf die Breite eines aufgenommenen Behältnisses beziehungsweise der aufgenommenen Gegenstände erzwingt. In das Trägerteil 1 sind mehrere halbkreisförmige Haltelippen 4 integriert, die aus einem elastischen Material bestehen und die Stabilität der Halterung für die aufgenommenen Behältnisse erhöhen und insbesondere ein Klappern beispielsweise im Fahrbetrieb verhindern. Die einem aufzunehmenden Behältnis zugewandte Seite des Scharniers ist ebenfalls haltelippenförmig ausgebildet. Zusätzlich kann die Oberfläche des Scharniers in diesen Bereich mit einem elastischen Material versehen sein.

An der Unterseite des verschwenkbaren Seitenarmes befindet sich eine in dieser Figur nicht näher dargestellte Rastvorrichtung, die den Seitenarm so fixiert, daß dieser mit dem Trägerteil zumindest an der Außenseite eine im wesentlichen geschlossene Oberfläche bildet. Bei fixiertem Seitenarm weist die Haltevorrichtung im wesentlichen die Form eines schräg abgeschnittenen Hohlzylinders auf Im Bereich des Seitenarmes weist die Haltevorrichtung eine geringere Höhe auf als im Bereich des Trägerteiles. Dadurch wird erreicht, daß das Einstellen und die Entnahme von aufzunehmenden Gegenständen und Behältnissen auf besonders ergonomische Weise erfolgen kann.

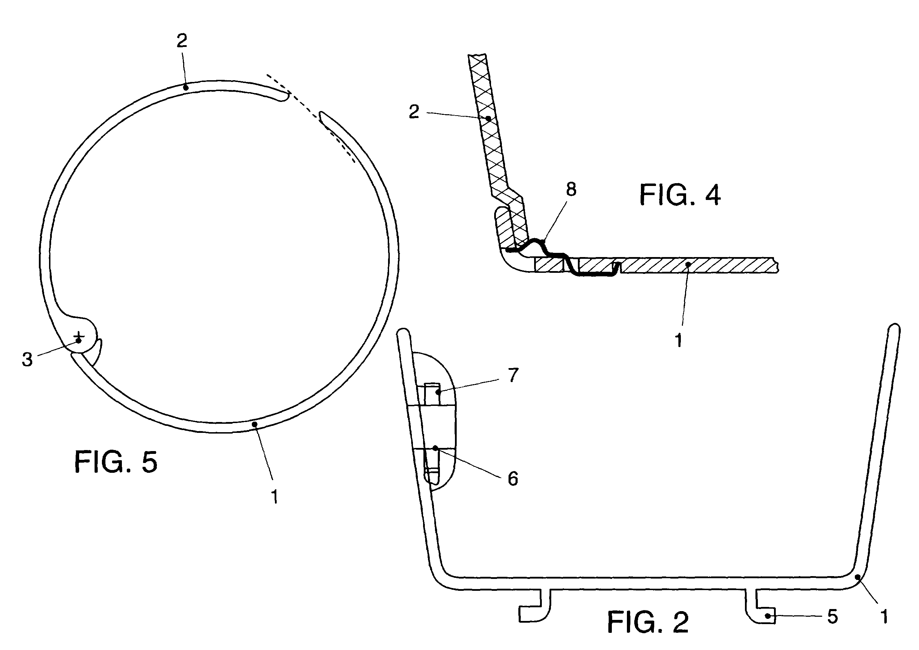

Zur Befestigung der Haltevorrichtung an Teilen der Innenverkleidung, insbesondere im Bereich der Mittelkonsole, wird der in Figur 2 dargestellte Bajonettverschluß verwendet. Der Bajonettverschluß ist einstückig am Trägerteil befestigt und wird direkt bei der Produktion am Trägerteil angebracht, so daß kein zusätzlicher Produktions- oder Montageaufwand entsteht. Alternativ ist es jedoch auch möglich, beispielsweise eine mit einem Bajonettverschluß versehene Platte mittels beispielsweise Verschrauben, Verkleben und/oder Verschweißen am Trägerteil zu befestigen.

Das Innenverkleidungsteil, an dem die Haltevorrichtung angebracht werden soll, trägt eine entsprechende Bajonettverschlußaufnahme (nicht dargestellt).

In das Scharnier 6 ist eine Feder 7 integriert, die den verschwenkbaren Seitenarm belastet. Dadurch wird bei einer Entrastung des Seitenarmes der Seitenarm in Richtung der aufgenommenen Gegenstände beziehungsweise Behältnisse bewegt.

In den Figuren 3 und 4 ist die Rastvorrichtung zur Fixierung des Seitenarmes detailliert dargestellt. Am Trägerteil 1 ist eine Metallfeder 8 befestigt, die eine Wölbung aufweist. Über dieser Metallfeder 8 gleitet ein am verschwenkbaren Seitenarm befestigter Raststift 9. Bei ausreichender Krafteinwirkung auf den verschwenkbaren Seitenarm 2 in die Richtung weg vom Mittelpunkt des durch die Haltevorrichtung gebildeten Hohlzylinders gleitet der Seitenarm 2 nach außen über die Wölbung der Metallfeder 8. Durch die Federkraft der in das Scharnier 3 integrierten Feder 7 wird der verschwenkbare Seitenarm 2 in dieser Stellung, in der der Seitenarm 2 mit dem Trägerteil 1 an dessen Außenseite eine zumindest im wesentlichen geschlossene Oberfläche bildet, fixiert. Zum Lösen der Verrastung ist eine Krafteinwirkung auf den verschwenkbaren Seitenarm 2 in Richtung des Mittelpunktes des durch die Haltevorrichtung gebildeten Hohlzylinders erforderlich, so daß der am Seitenarm befestigte Raststift 9 in entgegengesetzter Richtung nach innen über die Wölbung der Metallfeder 8 gleitet.

In Figur 5 ist das Ausführungsbeispiel der erfindungsgemäßen Haltevorrichtung mit durch Verrastung fixiertem Seitenarm dargestellt. Bei Verrastung des Seitenarmes bildet der Seitenarm mit dem Trägerteil eine zumindest an der Außenseite im wesentlichen beschlossenen Oberfläche. Dadurch gliedert sich die Haltevorrichtung nahtlos in das Innenraumdesign ein und erfüllt hohe optische Ansprüche.

Mit der dargestellten Haltevorrichtung lassen sich vielfältige Ablagevarianten realisieren. Dazu können an einem Innenraumverkleidungsteil eines Fahrzeuges, insbesondere im Bereich der Mittelkonsole, mehrere Aufnahmen für Bajonettverschlüsse vorgesehen werden, die dann wahlweise beispielsweise mit mit Bajonettverschlüssen versehenen Aschenbechern, Cupholdern oder Kleinteileaufnahmen bestückt werden. Dadurch ist die Ablagefläche sehr flexibel gestaltbar und optimal an die Anforderungen beispielsweise eines Fahrzeuginsassen anpaßbar.

## Patentansprüche

1. Haltevorrichtung, insbesondere für ein Fahrzeug, mit zumindest einem Trägerteil und mindestens einem am Trägerteil befestigten, verschwenkbaren Seitenarm,
dadurch gekennzeichnet, daß
das Trägerteil zumindest im wesentlichen topf- oder trogförmig ausgebildet ist.

2. Haltevorrichtung nach Anspruch 1,
dadurch gekennzeichnet, daß
der verschwenkbare Seitenarm auf die Breite eines aufgenommenen Behältnisses beziehungsweise die Breite aufgenommener Gegenstände einschwenkbar ist.

3. Haltevorrichtung nach Anspruch 2,
dadurch gekennzeichnet, daß
der verschwenkbare Seitenarm mittels eines Energiespeichers beaufschlagbar ist.

4. Haltevorrichtung nach Anspruch 3,
dadurch gekennzeichnet, daß
der Energiespeicher als Feder ausgeführt ist.

5. Haltevorrichtung nach einem oder mehreren der vorhergehenden Ansprüche,
dadurch gekennzeichnet, daß
am Trägerteil eine Befestigungsvorrichtung zur Befestigung der Haltevorrichtung an mindestens einem Teil einer Innenverkleidung des Fahrzeuges, insbesondere im Bereich der Mittelkonsole, vorgesehen ist.

6. Haltevorrichtung nach Anspruch 5,
dadurch gekennzeichnet, daß
die Befestigungsvorrichtung als Bajonettverschluß ausgeführt ist.

7. Haltevorrichtung nach einem oder mehreren der vorhergehenden Ansprüche,
dadurch gekennzeichnet, daß
eine Raste vorgesehen ist, mittels der der verschwenkbare Seitenarm fixierbar ist.

8. Haltevorrichtung nach Anspruch 7,
dadurch gekennzeichnet, daß
die Raste so ausgeführt ist, daß der mittels der Raste fixierte Seitenarm mit dem topf-oder trogförmig ausgebildeten Trägerteil zumindest an dessen Außenseite eine im wesentlichen geschlossene Oberfläche bildet.

9. Haltevorrichtung nach einem oder mehreren der vorhergehenden Ansprüche,
dadurch gekennzeichnet, daß
in das Trägerteil und/oder in den Seitenarm Haltelippen integriert sind.

10. Haltevorrichtung nach Anspruch 9,
dadurch gekennzeichnet, daß
die Haltelippen aus einem elastischen und/oder dämpfenden Material bestehen.

11. Haltevorrichtung nach einem oder mehreren der vorhergehenden Ansprüche,
dadurch gekennzeichnet, daß
der verschwenkbare Seitenarm mittels eines Scharniers an dem Trägerteil befestigt ist.

12. Haltevorrichtung nach Anspruch 11,
dadurch gekennzeichnet, daß
das Scharnier selbst als Haltelippe ausgeführt ist.
